# EUROPEAN PATENT SPECIFICATION

(11) **EP 2 253 832 B1**
(45) Date of publication and mention of the grant of the patent: **09.01.2013**
(21) Application number: 10162798.2
(22) Date of filing: 13.05.2010
(51) Int. Cl.: F02P 5/152

(54) **Method for controlling the knocking in an internal-combustion engine**
Verfahren zur Klopfregelung in einer Brennkraftmaschine
Procédé de régulation du cliquetis dans un moteur à combustion interne

(30) Priority: 13.05.2009 IT BO20090308
(43) Date of publication of application: 24.11.2010
(73) Proprietor: Magneti Marelli S.p.A., Corbetta (MI) (IT)
(72) Inventor: Cavanna, Filippo, 40139 Bologna (IT); Sgatti, Stefano, 40026 Imola (IT); Garagnani, Nicola, 40056 Crespellano (IT); Caterini, Rocco Canio, 85010 Cancellara (IT); Vitale, Fabio, 41121 Modena (IT)
(74) Representative: Jorio, Paolo

(56) References cited:
- EP-A- 0 661 448
- JP-A- 63 176 665
- US-A- 4 594 982
- US-A- 5 421 304
- US-A1- 2009 070 017

## Description

### TECHNICAL SECTOR

The present invention relates to a method for controlling the knocking in an internal-combustion engine.

### PRIOR ART

As is know, the anti-knock value of a fuel represents the property of the fuel itself to ignite during the stroke of a piston within a cylinder of an internal-combustion engine. In other words, it may be stated, roughly, that the anti-knock value of a fuel represents the "resistance" of the fuel to knock, i.e., its resistance to giving rise to an explosion as a mere result of the pressure of the piston.

The anti-knock value is measured through the octane number, which is conventionally indicated in a scale from 1 (which represents a bad fuel) to 100 (which represents a good fuel) and is obtained experimentally for the various types of fuel. The octane number is directly connected to the presence in the fuel of certain anti-knock substances that manage to reduce considerably the thermal and mechanical stresses to which the internal-combustion engine of a motor vehicle is subjected. In fact, the higher the octane number, the higher the anti-knock value of the fuel, and this means that the risk of ignition of the fuel due to mere compression caused by the piston (i.e., in the absence of the spark generated by the spark plug) is reduced.

The petrol normally on sale has an octane number 95, even though currently various oil companies propose on sale fuels affording higher performance levels (and hence sold at a higher price) with octane number comprised between 98 and 100. It thus happens that fuels having chemical properties very different from one another are sold indifferently for supplying controlled-ignition internal-combustion engines.

This problem is even more felt in certain emerging countries in which it frequently happens that in refuelling stations just a few hundred kilometres away from one another, it is possible to refuel with two fuels that have an octane number different from one another and hence a different anti-knock value.

This difference represents a non-trivial problem for the control system of a controlled-ignition internal-combustion engine. In fact, an electronic control unit for controlling an engine uses, for carrying out control of the combustion, predetermined parameters, amongst which the anti-knock value, typical of a standard reference fuel. In the case where the fuel effectively used departs significantly from these predetermined parameters, it is of fundamental importance to enable immediate recognition of this condition so as to react adequately. This is made possible by adapting the response of the electronic control unit to the fuel in use after refuelling, so as to produce a reaction that is in line with the anti-knock value of the new fuel.

For example, the patent application US-A1-2009070017 discloses a method to determine the fuel composition of a fuel mixture from a first fuel and a second fuel for the operation of an internal combustion engine, wherein the first and the second fuel have different octane numbers and wherein the internal combustion engine has at least one knock sensor and a closed-loop knock control.
The patent application US-A-4594892 relates to an ignition timing control apparatus for an internal combustion engine suitable for using as a fuel a regular (low-octane) gasoline, a premium (high-octane) gasoline, or a mixture of both type of gasolines. The advance ignition timing control apparatus detects the knocks of the internal combustion engine and provides, as an output therefrom, a signal according to the occurrence rate of the knocks which essentially indicates the type of gasoline in use.
An internal combustion engine control system and method for the suppression of knock events are known from the patent application US-A-5421304.

Anyway, following on the variation in the anti-knock value of the fuel, it is thus necessary to safeguard the engine and guarantee maintenance of an acceptable driving comfort and conditions of safety for the occupants of the motor vehicle.

### DESCRIPTION OF THE INVENTION

The aim of the present invention is to provide a method for controlling the knocking in an internal-combustion engine that will be free from the drawbacks of the prior art, will enable increase in the level of reliability of the internal-combustion engine, and will be convenient and economically advantageous to implement.

Provided according to the present invention is a method for controlling the knocking in an internal-combustion engine according to what is claimed in the annexed claims.

### BRIEF DESCRIPTION OF THE DRAWINGS

The present invention will now be described with reference to the annexed drawings, which illustrate a non-limiting example of embodiment thereof and in which:
- Figure 1 is a schematic view of an internal-combustion engine operating according to the method for controlling the knocking forming the subject of the present invention; and
- Figure 2 is a schematic view of a map used in an electronic control unit for controlling the internal-combustion engine of Figure 1.

### PREFERRED EMBODIMENTS OF THE INVENTION

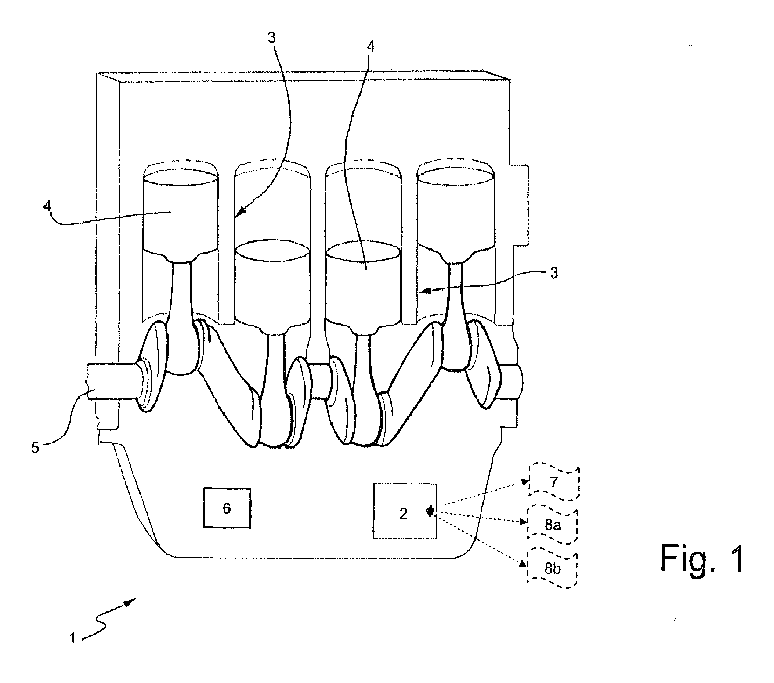

In Figure 1, the reference number 1 designates as a whole a controlled-ignition internal-combustion engine for a motor vehicle that is provided with a fuel-supply circuit (not illustrated). The fuel-supply circuit comprises a refuelling duct, which is connected to the inlet of a tank for filling with the fuel during refuelling at a fuel pump.

The fuel-supply circuit then comprises a pipe at outlet from the tank for supplying the fuel to a common injection manifold (not illustrated), which is controlled by an electronic control unit 2. The electronic control unit 2 governs injection of the fuel within the cylinders 3 of the internal-combustion engine 1, calculating times and amount of the fuel to be injected via an injector assembly (not illustrated). In particular, the internal-combustion engine 1 comprises four cylinders 3, each of which houses in a slidable way a respective piston 4, which is mechanically connected to a crankshaft 5.

The piston 4 takes in a mixture of fuel and air (i.e., supporter of combustion) within the cylinder 3 in the initial stroke, whilst it compresses it as it returns back. A little before the step of compression ends, a spark plug (not illustrated) ignites the mixture of fuel and air, causing a combustion that pushes the piston 4 downwards, restarting the cycle.

Not all fuels, however, burn to the same extent, and the parameters that determine ignition thereof are, for example, temperature and pressure, as well as the intrinsic characteristics of the fuel and in particular its anti-knock value.

In the controlled-ignition internal-combustion engine 1, the aim is to get the fuel to ignite when the spark plug sparks, and not before, a condition that arises when the fuel has an anti-knock value that is too low with respect to the operating mode. In this case, the fuel itself ignites spontaneously in advance, giving rise to the phenomenon that is known as "spark knock", which causes diffusion of irregular forces within the internal-combustion engine 1 and causes damage thereof and above all generates an undesirable noise that is perceived by the driver.

For detecting onset of phenomena of knocking, at least one engine-knock sensor is provided, which is designed to acquire a physical quantity (for example, vibrations/accelerations, noise, ionization currents) correlated to the phenomenon of knocking and sends a signal to the electronic control unit 2.

To seek to get the internal-combustion engine 1 to operate in conditions close to the knocking, without however arriving at the knocking (conditions that generally enable the maximum efficiency to be achieved), the electronic control unit 2 determines at each engine cycle the spark advance AA for each cylinder 3. In particular, the electronic control unit 2 reads the values of the spark advance AA from a base map 7 (obtained experimentally) that is applied in an undifferentiated way for all the cylinders 3 of the internal-combustion engine and that is divided into a number of cells, each of which identifies uniquely a given point of operation of the internal-combustion engine 1. Each point of operation is identified by a pair of variables and, more precisely, by the r.p.m. of the internal-combustion engine 1 and by the coefficient of filling of the cylinder 3 involved in the combustion.

In order to take into account the time drifts, the constructional tolerances, and above all the specificities of the current situation, the electronic control unit 2 determines at each engine cycle also an instantaneous advance correction CAI of the spark advance AA, which is applied to the spark advance AA for correcting the spark advance AA itself (both positively, and negatively). The instantaneous advance correction CAI is given by the sum of an instantaneous correction contribution CCI, which is updated at each engine cycle by the electronic control unit 2 according to the signals measured by the engine-knock sensor and has the aim of avoiding the onset of phenomena of knocking and hence reacting immediately in the event of knocking, and an adaptive correction contribution CCA, which is learnt during operation and is stored in purposely provided adaptive maps 8. In other words, the instantaneous advance correction CAI is given by the algebraic sum of an instantaneous correction contribution CCI, which is updated potentially at each engine cycle according to the onset of phenomena of knocking, and an adaptive correction contribution CCA, which is learnt during operation and is stored in purposely provided adaptive maps 8. According to a preferred embodiment, determined in a step of design and setting up are at least two (there could even be more) adaptive maps 8 that yield the adaptive correction contribution CCA (i.e., at least part of the instantaneous advance correction CAI) as a function of the engine point for fuels with high anti-knock value and for fuels with low anti-knock value, respectively. In particular, an adaptive map 8a provides the adaptive correction contribution CCA according to the engine point for fuels with high anti-knock value, and an adaptive map 8a provides the adaptive correction contribution CCA according to the engine point for fuels with low anti-knock value.

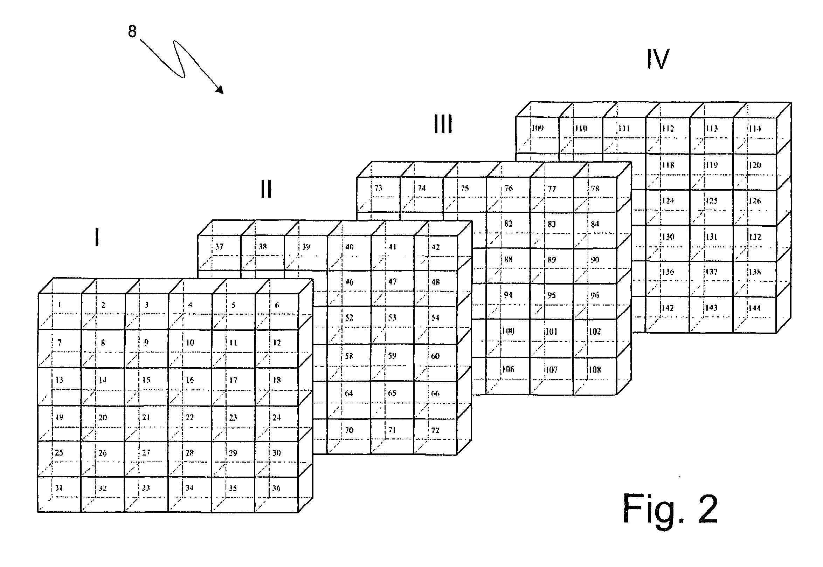

According to what is illustrated more fully in Figure 2, each adaptive map 8 is in actual fact divided into four distinct tables (identified with the Roman numerals I, II, III, IV), each of which is associated to a respective cylinder 3. Each table I-IV of a map 8 comprises 36 cells (identified by a progressive number in Figure 2), and each cell identifies in turn a given point of operation of the cylinder 3 involved in the combustion. Each point of operation is identified by a pair of variables and, more precisely, by the rpm of the internal-combustion engine 1 and by the coefficient of filling of the cylinder 3 involved in the combustion that is being programmed. In order not to impose an excessive computational burden on the electronic control unit 2, the tables I-IV are managed as a single vector (according to what is represented more clearly in Figure 2, in fact, the cells of the four maps have been numbered sequentially from 1 to 144). It is clearly possible to increase the number of cells of each adaptive map 8 by increasing the granularity of the rpm of the internal-combustion engine 1 and of the coefficient of filling of the cylinder 3, even though it should be considered that a more detailed solution leads to an increase in the computational burden of the electronic control unit 2 and hence a reduction in the speed of reaction of the electronic control unit 2 itself.

When the electronic control unit 2 detects vehicle refuelling following on a turning-off of the internal-combustion engine 1, on subsequent restarting of the internal-combustion engine 1 the electronic control unit 2 recognizes the anti-knock value of the fuel in use introduced by refuelling and hence uses, for determining the adaptive correction contribution CCA of the instantaneous advance correction CAI according to the engine point, the adaptive map 8 corresponding to the anti-knock value of the fuel in use. In other words, if before refuelling the electronic control unit 2 was using the adaptive map 8a for fuels with high anti-knock value, after refuelling it must decide whether to continue using said adaptive map 8a for fuels with high anti-knock value or else pass to the adaptive map 8b for fuels with low anti-knock value; likewise, if before refuelling the electronic control unit 2 was using the adaptive map 8b for fuels with low anti-knock value, after refuelling it must decide whether to continue using said adaptive map 8b for fuels with low anti-knock value or else pass to the adaptive map 8a for fuels with high anti-knock value.

For recognizing the anti-knock value of the fuel in use, the electronic control unit 2 compares the current instantaneous advance correction CAI (or rather an average of some values for reducing the incidence of the accidental errors) with a threshold S of average instantaneous advance correction (which is determined experimentally in a step of design and setting up) and recognizes the anti-knock value of the fuel in use according to the comparison between the current instantaneous advance correction CAI and the threshold S of average instantaneous advance correction. Clearly, the comparison is a point comparison; i.e., it is made for a given engine point that identifies the rpm of the internal-combustion engine 1 and the coefficient of filling of the cylinder. According to a possible embodiment, in the step of recognition of the anti-knock value of the fuel in use, the use of the adaptive correction contribution CCA is disenabled, and hence the instantaneous advance correction CAI coincides with the instantaneous correction contribution CCI. Preferably, the comparison between the current instantaneous advance correction CAI and the threshold S of average instantaneous advance correction occurs in one or more engine points of recognition that are particularly suitable for said comparison and are identified during a step of design and setting up.

Having only two adaptive maps 8, the recognition of the anti-knock value of the fuel in use described above envisages recognition of whether the fuel in use introduced by refuelling has a high anti-knock value or a low anti-knock value. According to a preferred embodiment, the threshold S of average instantaneous advance correction is differentiated according to whether the fuel previously in use presents a high anti-knock value or else a low anti-knock value and varies according to a temperature of the air taken in by the internal-combustion engine 1 (a temperature that is determined in a known way by the electronic control unit 2).

In other words, the electronic control unit 2 diagnoses passage from a fuel with a high anti-knock value to a fuel with a low anti-knock value when the current instantaneous advance correction CAI differs significantly from a first threshold S1 of average instantaneous advance correction, and the electronic control unit 2 diagnoses the passage from a fuel with a low anti-knock value to a fuel with a high anti-knock value when the current instantaneous advance correction CAI differs significantly from a second threshold S2 of average instantaneous advance correction.

Furthermore, in the case where there is diagnosed the passage from a fuel with a low anti-knock value to a fuel with a high anti-knock value, the strategy envisages: carrying out a further check for controlling reaching, by the coolant of the internal-combustion engine 1, of a temperature deemed sufficient to render the strategy more robust; preventing any damage in the implementation of the strategy itself: and preventing incurring in the danger of false recognitions.

According to a variant, as regards the transition from a fuel with a high anti-knock value to a fuel with a low anti-knock value, it is necessary to wait for a confirmation time interval ΔT₁ to confirm that the characteristics of the fuel in use have changed: after the first recognition, it is then necessary to wait for the time interval ΔT₁ of pre-settable length to proceed to a new verification comparison. In an altogether similar way, as regards instead transition from a fuel with a low anti-knock value to a fuel with a high anti-knock value, it is necessary to wait for a confirmation time interval ΔT₂ to confirm that the characteristics of the fuel in use have changed; after the first recognition, it is then necessary to wait for the time interval ΔT₂ of pre-settable length to proceed with a new verification comparison.

According to a further variant, the verification comparisons are not made only at the start and at the end of the two time intervals ΔT₁, ΔT₂ of pre-settable length, but also at instants comprised within the two time intervals ΔT₁, ΔT₂ themselves (for example, at each TDC).

According to a preferred embodiment, once the electronic control unit 2 has recognized a variation in the anti-knock value of the fuel in use, for obvious reasons of stability and robustness, the algorithms for recognition of the anti-knock value of the fuel are disenabled until the next refuelling.

During normal operation of the internal-combustion engine 1 (i.e., when recognition of the anti-knock value of the fuel in use has been performed), the electronic control unit 2 calculates an average of the instantaneous advance corrections CAI within a given time interval when the current engine point is sufficiently stable, and then uses the average of the instantaneous advance corrections CAI to update the adaptive map 8 corresponding to the anti-knock value of the fuel in use. The average of the instantaneous advance corrections CAI relative to a given engine point is used to update the adaptive map 8 corresponding to the anti-knock value of the fuel in use at the same engine point and can also be propagated to other engine points and/or to other cylinders 3.

When it is recognized that a refuelling has been carried out, irrespective of the recognition of transition from a fuel with a low anti-knock value to a fuel with a high anti-knock value or vice versa, a high importance is attributed to the propagation of the spark advances. This is because for each engine point identified within any map 8, it is advisable to propagate the update based on the average of the instantaneous advance corrections relative to a given cylinder 3 both within the same table I-IV, i.e., for the same cylinder 3, and to the other tables I-IV, i.e., to the other cylinders 3. This is reasonable above all considering that, by mixing different types of fuel in different proportions inside the tank, it is possible to obtain fuels with intermediate characteristics, which are necessarily not identifiable in a strict sense as good fuel or bad fuel.

In other words, the updating based on the average of the instantaneous advance corrections CAI relative to a given engine point can be propagated to other neighbouring engine points in the adaptive map 8 corresponding to the anti-knock value of the fuel in use typically by reducing the consistency of the update the further the distance from the given engine point in the adaptive map 8 corresponding to the anti-knock value of the fuel in use. Furthermore, the update based on the average of the instantaneous advance corrections CAI relative to a given cylinder 3 may be propagated from the table of the cylinder 3 concerned to the tables of the other cylinders 3.

To propagate the update, the electronic control unit 2 determines a propagation coefficient C according to the difference between the average of the instantaneous advance corrections CAI relative to a given engine point and the advance correction stored in the adaptive map 8 corresponding to the anti-knock value of the fuel in use for the same engine point; then, the electronic control unit 2 applies the propagation coefficient C to other engine points of the same cylinder 3 and/or of other cylinders 3 and/or to the same engine point of other cylinders 3. Typically, the propagation coefficient C varies according to the nearness/farness to/from the cylinder 3 concerned and to/from the given engine point, i.e., it decreases the greater the distance from the cylinder 3 concerned and from the given engine point.

The main contributions to the propagation coefficient C according to a given engine point and of a given cylinder 3 are generally five in number (which will be designated hereinafter by C1, C2, C3, C4 and C5) and their values are usually comprised between 0 and 1.

The first contribution C1 is calculated according to the average instantaneous advance correction CAI of all the cylinders 3. According to what has been found from certain experimental tests, this contribution C1 is indicative of the anti-knock value of the fuel in use.

The second contribution C2 is a function of the instantaneous correction contribution CCI on the cylinder 3 under analysis. The second contribution C2 is of fundamental importance in so far as it enables the system to react promptly and enables differentiation of the speed of propagation in the two cases, i.e., reduction and increase of spark advance (basically transition from bad fuel to good fuel or else from good fuel to bad fuel).

The third contribution C3 is a function of the engine operating point, identified by the rpm of the internal-combustion engine 1 and by the coefficient of filling of the cylinder 3 involved in the combustion that is being programmed. The third contribution C3 is important in so far as it enables faster propagation at given points such as, for example, during pick-up.

The fourth contribution C4 is a function of the stay time at the operating engine point, identified by the r.p.m. of the internal-combustion engine 1 and by the coefficient of filling of the cylinder 3 involved in the combustion that is being programmed. In fact, it is reasonable to assume that the stability of operation is an indicator of a greater reliability and goodness of the value adapted and that the latter can hence be propagated with a higher degree of confidence.

Finally, the fifth contribution C5 is designed to diversify the adaptivity on the cylinder 3 involved in the combustion that is being programmed with respect to the other cylinders 3 of the internal-combustion engine 1, since in the latter case the propagation will reasonably have to be of a lower degree. According to a possible variant embodiment, in order to render the strategy more robust, it is possible to choose to prevent propagation at the engine points already adapted to a given cylinder 3, i.e., of a specific table I-IV.

Finally, it is necessary to determine the area of propagation of the adaptivity, i.e., it is necessary to choose into how many cells and which cells the propagation is to be extended. One of the paths that may be followed is to modulate the size of the area of propagation according to the value reached by the average instantaneous advance correction CAI for all the cylinders 3. The management of the area of propagation is not trivial in so far as it is necessary meet the need to ensure a system optimized from the standpoint of the computational burden for the electronic control unit 2.

Described in what follows is an example of determination of the area of propagation with particular reference to Figure 2.

As has already been seen, according to what is illustrated in Figures 1 and 2, the internal-combustion engine 1 comprises four cylinders, corresponding to each of which is a specific table I-IV of an adaptive map 8 for the instantaneous advance correction CAI of the corresponding cylinder 3 indexed by six rpms of the internal-combustion engine 1 and by as many coefficients of filling of the cylinder 3.

We shall now assume carrying out an analysis of the combustion of the second cylinder 3 at the engine point identified by the rpm of the internal-combustion engine 1 and by the coefficient of filling of the cylinder 3 that identify the cell 52 of the corresponding table II considered.

In the fist place, it is necessary to identify the cells in which propagation of the adapted value is to be carried out both for the same cylinder 3, i.e., in the adaptive table II itself, and for the other cylinders 3, i.e., in the other adaptive tables I-III-IV. Determination of the cells in which propagation is to be carried out is obtained by implementation of an algorithm containing the information on the dimensions of the adaptive tables I-IV and the characteristics of the engine points.

As regards the same cylinder 3, for example, the area of propagation identified by the algorithm extends to the eight cells that surround the cell 52 being examined, i.e., the cells 45, 46, 47, 51, 53, 57, 58, 59.

As regards the other cylinders 3, the area of propagation extends in the fist place to the three points of tables I, III and IV to which there correspond the same rpm of the internal-combustion engine 1 and the same coefficient of filling that identify the cell 52, i.e., the cells 16, 88 and 124.

The area of propagation identified by the algorithm extends then to the eight cells that surround each of the cells 16, 88, 124, i.e., the cells 9, 10, 11, 15, 17, 21, 22, 23 for table I, the cells 81, 82, 83, 87, 89, 93, 94, 95 for table III, and the cells 117, 118, 119, 123, 125, 129, 130, 131 for table IV, respectively.

Of course, the electronic control unit 2 disenables updating of the adaptive map 8 corresponding to the anti-knock value of the fuel in use in the time interval comprised between a refuelling and the subsequent recognition of the anti-knock value of the fuel in use.

As has been mentioned previously, during normal operation of the internal-combustion engine the electronic control unit 2 must in the fist place recognize the condition of refuelling having taken place; i.e., it must detect when a fuel that could present an anti-knock value different from the one used previously and contained in the tank has been introduced by refuelling at a fuel pump. Recognizing that refuelling has taken place is a very important condition for enabling adaptation of the control strategy to the anti-knock value of the new fuel so as to guarantee a sufficient driving comfort and to safeguard as much as possible proper operation of the internal-combustion engine 1 in so far as the reaction by the algorithms for controlling spark advance must be congruous with the new fuel.

To recognize the condition of refuelling having taken place, a diagnosis parameter P is used, which is a function of the amount of fuel inside the tank and is detected by the sensors (not illustrated) arranged inside or else outside the tank itself. In particular, an operation of refuelling is diagnosed if the current value of the diagnosis parameter P differs significantly from the standard value of the diagnosis parameter P. The standard value of the diagnosis parameter P is calculated through the sum of the amount of fuel detected within the tank before turning-off (detected by the sensors of the tank) and a threshold value, of settable magnitude, which is calculated on the basis of the boundary conditions, such as, for example, the atmospheric conditions.

For example, in the case where, after a turning-off of the internal-combustion engine 1, the internal-combustion engine 1 is turned back on and no failure in the sensors of the tank is detected, it is necessary to wait for a testing time interval of calibratable and relatively short length from ignition to elapse, and then proceed to detection of the current value of the diagnosis parameter P that indicates the level of fuel inside the tank. In the case where no refuelling has taken place, the current value of the diagnosis parameter P is equal to the standard value of the diagnosis parameter P; i.e., it is the same as the amount of fuel inside the tank before turning-off plus the threshold value due to the variation of the boundary conditions. In the case where refuelling has occurred, the current value of the diagnosis parameter P is greater than the standard value of the diagnosis parameter P, i.e., greater than the amount of fuel inside the tank before turning-off plus the settable threshold value due to the variation of the boundary conditions. The strategy of recovery to be implemented in the case where the operation of refuelling is recognized, to enable operation in conditions of maximum safety, envisages enabling of an indicator that signals that refuelling has been carried out, which triggers the process of diagnosis for the recognition of the quality of fuel. According to a preferred embodiment, the indicator of "recognition made" is reset once a first time interval of operation of the internal-combustion engine 1, of a calibratable length, has elapsed starting from the instant of recognition of refuelling.

According to a possible embodiment, when the change of the anti-knock value of the fuel is recognized, i.e., when it is decided to change the adaptive map 8, it is possible to envisage maintenance also of the learning acquisitions due to possible types of ageing or wear of the internal-combustion engine 1, without, however, incurring in an excessive risk of knocking, by "transferring" some values from the adaptive map 8 used up to refuelling to the other adaptive map 8 to be used after refuelling.

This is made possible, as regards the transition from a fuel with a high anti-knock value to a fuel with a low anti-knock value (i.e., from a good fuel to a bad fuel), through the comparison for a given engine point between the current value present in the map 8 and the calibrated value. To take into account the learning acquisitions due to possible ageing or wear of the internal-combustion engine it is advisable to be conservative and maintain for each engine point within the adaptive map 8 the minimum value between the two compared values.

In an altogether similar way, instead, as regards the transition from a fuel with a low anti-knock value to a fuel with a high anti-knock value (i.e., from a bad fuel to a good fuel), for a given engine point the current value present in the adaptive map 8 and the calibrated value are compared. To take into account the learning acquisitions due to possible ageing or wear of the internal-combustion engine it is advisable to maintain for each engine point within the adaptive map 8 the maximum value between the two compared values.

The strategy described so far can advantageously be used for carrying out an instantaneous advance correction CAI of the adaptive contributions self-learned by the control system of an internal-combustion engine 1 and for implementing a series of strategies that are designed to limit as much as possible operation of the engine in conditions of knocking or with low performance. In addition, a further advantage lies in the reduction in the computational burden of the electronic control unit 2, in so far as it is not necessary to carry out a continuous check on the quality of the fuel in use.

## Claims

1. A method for controlling the knocking in an internal combustion engine (1) comprising at least one cylinder (3); the method comprises the steps of:
determining a spark advance (AA);
determining an instantaneous advance correction (CAI) of the spark advance (AA);
determining, during a design and setting up phase, at least two adaptive maps (8) which provide at least part of the instantaneous advance correction (CAI) according to the engine point for respectively fuels with high anti-knock value and fuels with low anti-knock value;
detecting a refuelling;
recognizing the anti-knock value of the fuel in use introduced with the refuelling, i.e. recognizing whether the fuel in use introduced with the refuelling presents a high anti-knock value or a low anti-knock value;
using, in order to determine the instantaneous advance correction (CAI) according to the engine point, the adaptive map (8) corresponding to the anti-knock value of the fuel in use;
applying the instantaneous advance correction (CAI) to the spark advance (AA);
detecting onset of knocking phenomena inside the cylinder (3); and
updating the instantaneous advance correction (CAI) according to the onset of knocking phenomena inside the cylinder (3);
the method is **characterised in that** the step of recognizing the anti-knock value of the fuel in use comprises the further steps of:
determining, during a design and setting up phase, at least one threshold (S) of average instantaneous advance correction (CAI), wherein the threshold (S) of average instantaneous advance correction (CAI) is differentiated according to the fact that the fuel previously in use presents a high anti-knock value or a low anti-knock value;
comparing the current instantaneous advance correction (CAI) with the threshold (S) of average instantaneous advance correction (CAI); and
recognizing the anti-knock value of the fuel in use according to the comparison between the current instantaneous advance correction (CAI) and the threshold (S) of average instantaneous advance correction (CAI).

2. The method for controlling the knocking according to claim 1 and comprising the further steps of:
identifying at least one recognition engine point suited for the comparison; and
comparing the current instantaneous advance correction (CAI) in the recognition engine point with the threshold (S) of average instantaneous advance correction (CAI).

3. The method for controlling the knocking according to claim 1 or 2 and comprising the further steps of:
determining a temperature of the air taken in by the internal combustion engine (1); and
varying the threshold (S) of average instantaneous advance correction (CAI) according to the temperature of the air taken in by the internal combustion engine (1).

4. The method for controlling the knocking according to one of the claims from 1 to 3 and comprising the further steps of:
calculating an average of the instantaneous advance corrections (CAI) within a given time interval when the current engine point is sufficiently stable; and
using the average of the instantaneous advance corrections (CAI) to update the adaptive map (8) corresponding to the anti-knock value of the fuel in use.

5. The method for controlling the knocking according to claim 4 and comprising the further step of using the average of the instantaneous advance corrections (CAI) relative to a given engine point to update the adaptive map (8) corresponding to the anti-knock value of the fuel in use in correspondence of the same engine point.

6. The method for controlling the knocking according to claim 5 and comprising the further step of propagating the update based on the average of the instantaneous advance corrections (CAI) relative to a given engine point to other neighbouring engine points in the adaptive map (8) corresponding to the anti-knock value of the fuel in use.

7. The method for controlling the knocking according to claim 6 and comprising the further step of reducing the consistency of the update the more one moves away from the given engine point in the adaptive map (8) corresponding to the anti-knock value of the fuel in use.

8. The method for controlling the knocking according to claim 5, 6 or 7, wherein the internal combustion engine (1) comprises a plurality of cylinders (3) and each adaptive map (8) is divided into tables, each of which is associated to a cylinder (3); the method further comprises the step of propagating the update based on the average of the instantaneous advance corrections (CAI) relative to a given cylinder (3) from the table of the concerned cylinder (3) to the tables of the other cylinders (3).

9. The method for controlling the knocking according to one of the claims from 6 to 8, wherein the step of propagating the update comprises the further steps of:
determining a propagation coefficient (C) according to the difference between the average of the instantaneous advance corrections (CAI) relative to a given engine point and the advance correction stored in the adaptive map (8) corresponding to the anti-knock value of the fuel in use for the same engine point; and
applying the propagation coefficient (C) to other engine points of the same cylinder (3) and/or of other cylinders (3) and/or to the same engine point of other cylinders (3).

10. The method for controlling the knocking according to claim 9, wherein the propagation coefficient (C) can vary according to the nearness/farness from the cylinder (3) concerned and from the given engine point.

11. The method for controlling the knocking according to one of the claims from 4 to 10 and comprising the further step of disenabling the update of the adaptive map (8) corresponding to the anti-knock value of the fuel in use in the time interval comprised between a refuelling and the successive recognition of the anti-knock value of the fuel in use.

12. The method for controlling the knocking according to one of the claims from 1 to 11 and comprising the further step of disenabling further recognitions of the anti-knock value of the fuel in use until the next refuelling after a recognition of the anti-knock value of the fuel in use has been carried out.

13. The method for controlling the knocking according to one of the claims from 1 to 12 and comprising the further step of determining the instantaneous advance correction (CAI) by adding an instantaneous correction contribution (CCI), which is updated at every engine cycle and fulfils the aim of avoiding the onset of knocking phenomena and reacting immediately in case of knocking, and an adaptive correction contribution (CCA), which is provided by the adaptive map (8) corresponding to the anti-knock value of the fuel in use.

## Patentansprüche

1. Verfahren zum Steuern des Klopfens in einer Brennkraftmaschine (1), die wenigstens einen Zylinder (3) enthält; wobei das Verfahren die folgenden Schritte umfasst:
Bestimmen einer Zündvoreilung (AA);
Bestimmen einer momentanen Voreilungskorrektur (CAI) der Zündvoreilung (AA);
Bestimmen während einer Entwurfs- und Einrichtphase von wenigstens zwei adaptiven Kennfeldern (8), die wenigstens einen Teil der momentanen Voreilungskorrektur (CAI) in Übereinstimmung mit dem Maschinenbetriebspunkt für jeweilige Kraftstoffe mit hohem Klopffestigkeitswert und Kraftstoffe mit niedrigem Klopffestigkeitswert bereitstellen;
Detektieren eines Tankvorgangs;
Erkennen des Klopffestigkeitswerts des verwendeten Kraftstoffs, der mit dem Tanken eingefüllt wird, d. h. Erkennen, ob der verwendete Kraftstoff, der beim Tanken eingefüllt wird, einen hohen Klopffestigkeitswert oder einen niedrigen Klopffestigkeitswert aufweist;
Verwenden des adaptiven Kennfeldes (8), das dem Klopffestigkeitswert des verwendeten Kraftstoffs entspricht, um die momentane Voreilungskorrektur (CAI) in Übereinstimmung mit dem Maschinenbetriebspunkt zu bestimmen;
Anwenden der momentanen Voreilungskorrektur (CAI) auf die Zündvoreilung (AA);
Detektieren des Einsetzens des Klopfphänomens in dem Zylinder (3); und
Aktualisieren der momentanen Voreilungskorrektur (CAI) in Übereinstimmung mit dem Einsetzen des Klopfphänomens in dem Zylinder (3);
wobei das Verfahren **dadurch gekennzeichnet ist, dass** der Schritt des Erkennens des Klopffestigkeitswerts des verwendeten Kraftstoffs die folgenden weiteren Schritte umfasst:
Bestimmen während einer Entwurfs- und Einrichtungsphase wenigstens eines Schwellenwerts (S) einer durchschnittlichen momentanen Voreilungskorrektur (CAI), wobei der Schwellenwert (S) der durchschnittlichen momentanen Voreilungskorrektur (CAI) entsprechend der Tatsache, dass der vorher verwendete Kraftstoff einen hohen Klopffestigkeitswert oder einen niedrigen Klopffestigkeitswert aufweist, unterschieden wird;
Vergleichen der aktuellen momentanen Voreilungskorrektur (CAI) mit dem Schwellenwert (S) der durchschnittlichen momentanen Voreilungskorrektur (CAI); und
Erkennen des Klopffestigkeitswerts des verwendeten Kraftstoffs in Übereinstimmung mit dem Vergleich zwischen der aktuellen momentanen Voreilungskorrektur (CAI) und dem Schwellenwert (S) der durchschnittlichen momentanen Voreilungskorrektur (CAI).

2. Verfahren zum Steuern des Klopfens nach Anspruch 1, das ferner die folgenden Schritte umfasst:
Identifizieren wenigstens eines
Erkennungsmaschinenbetriebspunkts, der für den Vergleich geeignet ist; und
Vergleichen der aktuellen momentanen Voreilungskorrektur (CAI) an dem Erkennungsmaschinenbetriebspunkt mit dem Schwellenwert (S) der durchschnittlichen momentanen Voreilungskorrektur (CAI).

3. Verfahren zum Steuern des Klopfens nach Anspruch 1 oder 2, das ferner die folgenden Schritte umfasst:
Bestimmen einer Temperatur der von der Brennkraftmaschine (1) angesaugten Luft; und
Variieren des Schwellenwerts (S) der durchschnittlichen momentanen Voreilungskorrektur (CAI) in Übereinstimmung mit der Temperatur der von der Brennkraftmaschine (1) angesaugten Luft.

4. Verfahren zum Steuern des Klopfens nach einem der Ansprüche 1 bis 3, das ferner die folgenden Schritte umfasst:
Berechnen eines Durchschnittswerts der momentanen Voreilungskorrekturen (CAI) innerhalb eines gegebenen Zeitintervalls, wenn der aktuelle Maschinenbetriebspunkt ausreichend stabil ist; und
Verwenden des Durchschnittswerts der momentanen Voreilungskorrekturen (CAI), um das adaptive Kennfeld (8) zu aktualisieren, das dem Klopffestigkeitswert des verwendeten Kraftstoffs entspricht.

5. Verfahren zum Steuern des Klopfens nach Anspruch 4, das ferner den weiteren Schritt des Verwendens des Durchschnittswerts der momentanen Voreilungskorrekturen (CAI) in Bezug auf einen gegebenen Maschinenbetriebspunkt umfasst, um das adaptive Kennfeld (8), das dem Klopffestigkeitswert des verwendeten Kraftstoffs entspricht, in Entsprechung mit demselben Maschinenbetriebspunkt zu aktualisieren.

6. Verfahren zum Steuern des Klopfens nach Anspruch 5, das ferner den weiteren Schritt des Erweiterns der Aktualisierung auf der Grundlage des Durchschnittswerts der momentanen Voreilungskorrekturen (CAI) in Bezug auf einen gegebenen Maschinenbetriebspunkt auf andere, benachbarte Maschinenbetriebspunkte in dem adaptiven Kennfeld (8), das dem Klopffestigkeitswert des verwendeten Kraftstoffs entspricht, umfasst.

7. Verfahren zum Steuern des Klopfens nach Anspruch 6, das den weiteren Schritt des Reduzierens der Konsistenz der Aktualisierung mit zunehmender Entfernung von dem gegebenen Maschinenbetriebspunkt in dem adaptiven Kennfeld (8), das dem Klopffestigkeitswert des verwendeten Kraftstoffs entspricht, umfasst.

8. Verfahren zum Steuern des Klopfens nach Anspruch 5, 6 oder 7, wobei die Brennkraftmaschine (1) mehrere Zylinder (3) umfasst und jedes adaptive Kennfeld (8) in Tabellen unterteilt ist, wovon jede einem Zylinder (3) zugeordnet ist; wobei das Verfahren ferner den Schritt des Erweiterns der Aktualisierung auf der Grundlage des Durchschnittswerts der momentanen Voreilungskorrekturen (CAI) in Bezug auf einen gegebenen Zylinder (3) von der Tabelle des betreffenden Zylinders (3) auf die Tabellen der anderen Zylinder (3) umfasst.

9. Verfahren zum Steuern des Klopfens nach einem der Ansprüche 6 bis 8, wobei der Schritt des Erweiterns der Aktualisierung ferner die folgenden Schritte umfasst:
Bestimmen eines Erweiterungskoeffizienten (C) in Übereinstimmung mit der Differenz zwischen dem Durchschnittswert der momentanen Voreilungskorrekturen (CAI) in Bezug auf einen gegebenen Maschinenbetriebspunkt und der Voreilungskorrektur, die in dem adaptiven Kennfeld (8) gespeichert ist, das dem Klopffestigkeitswert des verwendeten Kraftstoffs für denselben Maschinenbetriebspunkt entspricht; und
Anwenden des Erweiterungskoeffizienten (C) auf andere Maschinenbetriebspunkte desselben Zylinders (3) und/oder andere Zylinder (3) und/oder denselben Maschinenbetriebspunkt anderer Zylinder (3).

10. Verfahren zum Steuern des Klopfens nach Anspruch 9, wobei der Erweiterungskoeffizient (C) in Übereinstimmung mit der Nähe/Ferne zu dem betreffenden Zylinder (3) und zu dem gegebenen Maschinenbetriebspunkt variieren kann.

11. Verfahren zum Steuern des Klopfens nach einem der Ansprüche 4 bis 10, das den weiteren Schritt des Sperrens der Aktualisierung des adaptiven Kennfelds (8), das dem Klopffestigkeitswert des verwendeten Kraftstoffs entspricht, in dem Zeitintervall, das zwischen dem Tankvorgang und der nachfolgenden Erkennung des Klopffestigkeitswerts des verwendeten Kraftstoffs liegt, umfasst.

12. Verfahren zum Steuern des Klopfens nach einem der Ansprüche 1 bis 11, das den weiteren Schritt des Sperrens weiterer Erkennungen des Klopffestigkeitswerts des verwendeten Kraftstoffs bis zum nächsten Tankvorgang, nachdem eine Erkennung des Klopffestigkeitswerts des verwendeten Kraftstoffs ausgeführt worden ist, umfasst.

13. Verfahren zum Steuern des Klopfens nach einem der Ansprüche 1 bis 12, das den weiteren Schritt des Bestimmens der momentanen Voreilungskorrektur (CAI) durch Hinzufügen eines Beitrags (CCI) einer momentanen Korrektur, der in jedem Maschinenzyklus aktualisiert wird und das Ziel des Vermeidens des Einsetzens des Klopfphänomens und des sofortigen Reagierens im Fall eines Klopfens erfüllt, und eines Beitrags (CCA) einer adaptiven Korrektur, der durch das adaptive Kennfeld (8), das dem Klopffestigkeitswert des verwendeten Kraftstoffs entspricht, bereitgestellt wird, umfasst.

## Revendications

1. Procédé de régulation du cliquetis dans un moteur à combustion interne (1) comprenant au moins un cylindre (3) ;
le procédé comprenant les étapes suivantes :
déterminer une avance à l'allumage (AA) ;
déterminer une correction d'avance instantanée (CAI) de l'avance à l'allumage (AA) ;
déterminer, pendant une phase de planification et de configuration, au moins deux cartographies adaptatives (8) qui fournissent au moins une partie de la correction d'avance instantanée (CAI) en fonction du point de fonctionnement moteur pour des carburants à valeur anti-cliquetis élevée et pour des carburants à valeur anti-cliquetis basse respectivement ;
détecter un ravitaillement en carburant ;
identifier la valeur anti-cliquetis du carburant utilisé introduit lors du ravitaillement, c.-à-d. reconnaître si le carburant utilisé introduit lors du ravitaillement présente une valeur anti-cliquetis élevée ou une valeur anti-cliquetis basse ;
utiliser, afin de déterminer la correction d'avance instantanée (CAI) en fonction du point de fonctionnement moteur, la cartographie adaptative (8) correspondant à la valeur anti-cliquetis du carburant utilisé ;
appliquer la correction d'avance instantanée (CAI) à l'avance à l'allumage (AA) ;
détecter l'apparition de phénomènes de cliquetis à l'intérieur du cylindre (3) ;
et
mettre à jour la correction d'avance instantanée (CAI) en fonction de l'apparition de phénomènes de cliquetis à l'intérieur du cylindre (3) ;
procédé **caractérisé en ce que** l'étape d'identification de la valeur anti-cliquetis du carburant utilisé comprend en outre les étapes suivantes :
déterminer, pendant une phase de planification et de configuration, au moins un seuil (S) de correction d'avance instantanée (CAI) moyenne, le seuil (S) de correction d'avance instantanée (CAI) moyenne étant différencié selon que le carburant précédemment utilisé présente une valeur anti-cliquetis élevée ou une valeur anti-cliquetis basse ;
comparer la correction d'avance instantanée (CAI) en cours avec le seuil (S) de correction d'avance instantanée (CAI) moyenne ; et
identifier la valeur anti-cliquetis du carburant utilisé en fonction de la comparaison entre la correction d'avance instantanée (CAI) en cours et le seuil (S) de correction d'avance instantanée (CAI) moyenne.

2. Procédé de régulation du cliquetis selon la revendication 1, comprenant, en outre, les étapes suivantes :
identifier au moins un point de fonctionnement moteur de reconnaissance propre à la comparaison ; et
comparer la correction d'avance instantanée (CAI) en cours dans le point de fonctionnement moteur de reconnaissance avec le seuil (S) de correction d'avance instantanée (CAI) moyenne.

3. Procédé de régulation du cliquetis selon la revendication 1 ou 2, comprenant en outre les étapes suivantes :
déterminer une température de l'air absorbé par le moteur à combustion interne (1) ; et
faire varier le seuil (S) de correction d'avance instantanée (CAI) moyenne en fonction de la température de l'air absorbé par le moteur à combustion interne (1).

4. Procédé de régulation du cliquetis selon l'une des revendications 1 à 3, comprenant en outre les étapes suivantes :
calculer une moyenne des corrections d'avance instantanées (CAI) dans un intervalle de temps donné lorsque le point de fonctionnement moteur en cours est suffisamment stable ; et
utiliser la moyenne des corrections d'avance instantanées (CAI) pour mettre à jour la cartographie adaptative (8) correspondant à la valeur anti-cliquetis du carburant utilisé.

5. Procédé de régulation du cliquetis selon la revendication 4, comprenant en outre l'étape consistant à utiliser la moyenne des corrections d'avance instantanées (CAI) se rapportant à un point de fonctionnement moteur donné pour mettre à jour la cartographie adaptative (8) correspondant à la valeur anti-cliquetis du carburant utilisé en correspondance avec le même point de fonctionnement moteur.

6. Procédé de régulation du cliquetis selon la revendication 5, comprenant en outre l'étape consistant à propager la mise à jour basée sur la moyenne des corrections d'avance instantanées (CAI) se rapportant à un point de fonctionnement moteur donné à d'autres points de fonctionnement moteur voisins dans la cartographie adaptative (8) correspondant à la valeur anti-cliquetis du carburant utilisé.

7. Procédé de régulation du cliquetis selon la revendication 6, comprenant en outre l'étape consistant à réduire la cohérence de la mise à jour au fur et à mesure que l'on s'éloigne du point de fonctionnement moteur donné dans la cartographie adaptative (8) correspondant à la valeur anti-cliquetis du carburant utilisé.

8. Procédé de régulation du cliquetis selon la revendication 5, 6 ou 7, dans lequel le moteur à combustion interne (1) comprend une pluralité de cylindres (3) et chaque cartographie adaptative (8) est divisée en tables, chacune étant associée à un cylindre (3) ; le procédé comprenant en outre l'étape consistant à propager la mise à jour basée sur la moyenne des corrections d'avance instantanées (CAI) se rapportant à un cylindre donné (3) de la table du cylindre (3) concerné aux tables des autres cylindres (3).

9. Procédé de régulation du cliquetis selon l'une des revendications 6 à 8, dans lequel l'étape de propagation de la mise à jour comprend en outre les étapes suivantes :
déterminer un coefficient de propagation (C) en fonction de la différence entre la moyenne des corrections d'avance instantanées (CAI) se rapportant à un point de fonctionnement moteur donné et la correction d'avance mémorisée dans la cartographie adaptative (8) correspondant à la valeur anti-cliquetis du carburant utilisé pour le même point de fonctionnement moteur ; et
appliquer le coefficient de propagation (C) à d'autres points de fonctionnement moteur du même cylindre (3) et/ou d'autres cylindres (3) et/ou au même point de fonctionnement moteur d'autres cylindres (3).

10. Procédé de régulation du cliquetis selon la revendication 9, dans lequel le coefficient de propagation (C) peut varier en fonction de la proximité/de l'éloignement par rapport au cylindre (3) concerné et par rapport au point de fonctionnement moteur donné.

11. Procédé de régulation du cliquetis selon l'une des revendications 4 à 10, comprenant en outre l'étape consistant à désactiver la mise à jour de la cartographie adaptative (8) correspondant à la valeur anti-cliquetis du carburant utilisé dans l'intervalle de temps compris entre un ravitaillement en carburant et les reconnaissances successives de la valeur anti-cliquetis du carburant utilisé.

12. Procédé de régulation du cliquetis selon l'une des revendications 1 à 11, comprenant en outre l'étape consistant à désactiver des reconnaissances supplémentaires de la valeur anti-cliquetis du carburant utilisé jusqu'au prochain ravitaillement après qu'une identification de la valeur anti-cliquetis du carburant utilisé a été exécutée.

13. Procédé de régulation du cliquetis selon l'une des revendications 1 à 12, comprenant en outre l'étape consistant à déterminer la correction d'avance instantanée (CAI) en ajoutant une contribution de correction instantanée (CCI), qui est mise à jour à chaque cycle moteur et répond à l'objectif consistant à éviter l'apparition de phénomènes de cliquetis et à réagir immédiatement en cas de cliquetis, et une contribution de correction adaptative (CCA), qui est fournie par la cartographie adaptative (8) correspondant à la valeur anti-cliquetis du carburant utilisé.
